# EUROPEAN PATENT SPECIFICATION

(11) **EP 3 591 521 B1**
(45) Date of publication and mention of the grant of the patent: **26.07.2023**
(21) Application number: 19159992.7
(22) Date of filing: 28.02.2019
(51) Int. Cl.: G06F 9/451, G06F 8/30, G06Q 10/0631, G06Q 10/10, G06F 3/16

(54) **ASSISTANCE SYSTEM, METHOD, AND PROGRAM FOR ASSISTING A USER IN FULFILLING A TASK**
UNTERSTÜTZUNGSSYSTEM, VERFAHREN UND PROGRAMM ZUR UNTERSTÜTZUNG EINES BENUTZERS BEI DER ERFÜLLUNG EINER AUFGABE
SYSTÈME D'ASSISTANCE, PROCÉDÉ ET PROGRAMME POUR AIDER UN UTILISATEUR À EXÉCUTER UNE TÂCHE

(30) Priority: 05.07.2018 EP 18182032
(43) Date of publication of application: 08.01.2020
(73) Proprietor: Honda Research Institute Europe GmbH, 63073 Offenbach/Main (DE)
(72) Inventor: Heckmann, Dr. Martin, 63073 Offenbach (DE); Kolossa, Prof. Dr. Dorothea, 44801 Bochum (DE); Nabizadeh, Mr. Nima, 63067 Offenbach am Main (DE)
(74) Representative: Beder, Jens

(56) References cited:
- US-A1- 2014 176 603

## Description

The invention regards an assistance system including a robot, which assists a user in fulfilling a task and a corresponding method and program. The invention regards in particular an assistance system obtaining task knowledge without being actively trained by a human, which is suited for assisting the user in performing manual steps for fulfilling the task and/or giving advice.

It is generally known to assist a worker in performing a task by providing him with technical instructions, which may provide him with guidance on steps to be performed and which tools he needs for each step for successfully completing a task. Written guidelines, tutorials, possibly cross-referenced with technical documentation may, for example, provide instructions and taskrelevant knowledge on how to repair technical devices. Examples for such technical devices are land, sea, air vehicles, or any subsystem thereof.

Assistance systems may assist a user in performing tasks or services. Virtual assistants are able to interpret human speech and to respond to requests using synthesized voices. A user can ask the assistance system questions, for example, how to proceed with performing the task or the assistance system may even control a robot specifically adapted to support the user in performing the task in response to an instruction received from the user.

While conventional robots operate autonomously or with limited guidance in a guarded work environment, a new class of collaborative robots includes robots capable of operating together with a human worker in a shared workspace in a conjoint workflow. The user and the robot represent a cooperative system. A cooperative system exhibits cooperative behavior by one individual taking on some of the goals of another individual and acting together with the other to achieve these shared goals. A user and the assistance system may cooperate in performing the task.

Nevertheless, perception capabilities and the reasoning skills of intelligent systems such as assistance systems in a real world environment are limited at present and will improve only gradually in the near future. Additional knowledge on the task to be performed in cooperation might help the assistance system to cope with the present deficiencies. However, task knowledge can only be pre-programmed into the assistance system for a number of pre-defined cases and addressing previously known and specific scenarios.

US 2014/0176603 A1 discloses a method for training and guiding users. The method comprises generating a scene understanding based on video and audio input of a scene, which includes a user performing a task in the scene. The method comprises correlating the scene understanding with a knowledge base to generate a task understanding that includes one or more goals of the user, and reasoning, based on the generated task understanding and the user's current state, a next step for advancing the user towards completing one or more goals of the task understanding. The method proceeds with overlaying the scene with an augmented reality view comprising one or more visual and audio representations of the next step to the user.

Existing assistance systems are programmed using detailed and strict task descriptions. Thus, the system will recognize any deviation, since there is no flexibility in the task description. The system receives a sequence with each step of the detailed task description developed by a programmer, and the system's capability is limited to comparing this detailed task description to the current situation. It is desirable that the assistance system reacts more flexible to individual users to fulfill the task in a cooperative manner. Furthermore, it is also difficult to define and program for every task that needs to be fulfilled a detailed description.

In many cases, it is possible to subdivide a task into a plurality of subtasks that define sections and steps of the entire workflow for performing the task. This plurality of subtasks may be performed in different sequences. Thus, for example, different technicians working on a car might individually proceed with the necessary steps in a different order but achieve the same final goal.

The invention attempts to overcome these problems and seeks to provide a more versatile assistance system, which assists a user in performing a task with high flexibility in the actual task scenarios.

It is, therefore, an object of the present invention to use as a starting point for cooperatively fulfilling a task, the same or a similar basis of information that a human worker has. It is desirable to fulfill the task in a cooperative manner, with the robot reacting to the progress of the worker fulfilling the task.

The independent claims define the inventions. The dependent claims define further advantageous features.

The assistance system including a robot according to independent claim 1 according to a first aspect of the invention solves this problem. The corresponding assistance method according to a second aspect and the computer program according to a third aspect as claimed also address the problem.

The assistance system including a robot for assisting a user in fulfilling a task according to the first aspect comprises the robot configured to contribute cooperatively in performing the task cooperatively with the user, a human-machine interface unit for communicating with the user, a task input unit configured to obtain unstructured knowledge source data on the task, at least one of at least one visual sensor and an acoustic sensor, and a processor. The processor is configured to interpret a user input obtained by the human-machine interface unit and to analyze the obtained unstructured knowledge source data for generating an internal representation of the task. The processor monitors a task progress by interpreting at least one of the user input and image data. The processor is further configured to generate a support signal based on the generated internal representation and the monitored task progress and to output the generated support signal. The support signal comprises information on manipulating at least one object or information on how to perform the task.

According to the invention, at first, the assistance system has to obtain knowledge on the task. The task will then be segmented into different steps and/or subtasks. In order to gather knowledge on the task, unstructured or semi-structured data is analyzed. Such unstructured or semi-structured data is in many cases already available in the form of repair manuals. Repair manuals were originally prepared by a product manufacturer to train, for example, technicians to perform the repair and to guide humans through the different steps that sequentially have to be performed when fulfilling a specific task.

The information in these repair manuals is typically structured in a way that it can easily be understood and conceptualized by a human. In this sense, it is not fully unstructured but the structure is often not fully predictable and in particular not directed towards the interpretation by a machine. For this reason we will refer to such and similar information as unstructured. In some cases, the information is presented on an internet resource, which enforces the information creator to follow more or less clear structural guidelines. In these cases, the information is still not directed towards the interpretation by a machine but has more structure than repair manuals prepared by a product manufacturer. For this reason, we might refer to this information as semi-structured or subsume both semi-structured and unstructured knowledge under the term unstructured knowledge, in particular unstructured knowledge source data.

According to the invention, task knowledge is generated from unstructured text and/or image data, which is generally referred to as unstructured knowledge data. The assistance system, on the one hand senses the human user cooperating with the robot. Additionally, the assistance system senses the environment in which the user performs the task in cooperation with the robot. The assistance system also generates knowledge on the task the user intends to perform and knowledge on the objects required during executing the task. Such objects may be tools or spare parts. This task knowledge includes an internal representation of relations of the objects that are required during the execution of the task and individual steps of the task. The assistance system acquires this task knowledge by evaluating and interpreting unstructured data. Based on this task knowledge, the assistance system is able to resolve the requests of the user by narrowing down a search using the knowledge on the most likely involved tools and objects at each state of execution of a task. A temporal order in which the tools and objects are used my enable the assistance system to estimate the current state of the task, for example, task progress and/or a degree of success in completing the task.

The assistance system may form part of a robot that supports the user physically, for example, by handing objects like tools or spare parts to the user based on information contained in the support signal. Additionally or alternatively, the assistance system supports the user by providing information included in the support signal on how to continue performing the task taking into account the current state of the task.

The assistance system enables a successful cooperation between the user and the robot by an efficient and intuitive communication. Improved communication minimizes human effort and maximizes task progress. The assistance system benefits from vastly available unstructured and semi-structured task descriptions by harvesting them and making them available to the cooperation of the user and the robot in performing the task. Moreover, the assistance system is able to adapt quickly to an individual user and task idiosyncrasies.

The invention constitutes an assistance system that may learn task knowledge from unstructured data and even from user characteristics during interaction with the user.

The inventive approach is particularly suited to support cooperation between the user and the robot in a workshop environment and concerning frequently re-occurring, but flexibly structured tasks.

The inventive approach is also particularly suited to develop and further enhance the user's skills in addressing the task. The invention provides an assistance system that is able to cooperate with the user in a large set of activities. The assistance system enables the user to enhance his capabilities, to improve his abilities to address the task up to perfection or to learn intuitively new abilities.

The invention is particularly suited when applying belief tracking of the task progress, communication state, and human state, e.g. using methods known from dialog state tracking as Partially Observable Markov Decision Processes (POMDP), possibly also implemented as a hierarchical belief tracking (Williams, J., Raux, A., Ramachandran, D., & Black, A. (2013). The dialog state tracking challenge. In: Proceedings of the SIGDIAL 2013 Conference (pp. 404-413); Williams, J. & Raux, A. & Henderson, M. (2016). The dialog state tracking challenge series: A review. Dialogue & Discourse, 7(3), 4-33). The personalization of the communication between the user and the assistance system or the robot is achieved by learning user characteristics in the interaction between the assistance system and the user.

In the case of car manufacturing, manuals are provided to the workshops and garages, and usually mechanics go through the manuals or are trained based on information derived from the manuals so that they know how to perform specific tasks, like, for example, repairing an injection, changing an automatic transmission fluid, or the like. Amongst others, embodiments of the invention will be explained based on these examples later on.

The system according to an advantageous embodiment includes the processor configured to generate the internal representation of the task by subdividing the task into individual subtasks and/or steps, arranging the individual subtasks and/or steps in a representation defining their relation. The relation defines possible sequential and/or parallel execution based on a dependency (relation) between the individual steps. For each step it is identified which objects or parts of objects are involved for executing the step, in particular, the involved objects or the parts of objects include tools and/or spare parts. Further, for each step it is determined, how the involved objects or the parts of objects are to be manipulated for performing the task.

The initially unstructured task relevant knowledge prepared for humans is thus transformed into a structured internal representation of the task and therefore constitutes a suitable basis for controlling the assistance of a user.

In a preferred embodiment, the processor is configured to monitor the task progress by interpreting the user input, the user input including at least one of an oral (acoustic) user input, at least one visually perceivable gesture of the user, a tactile input of the user, and by interpreting the image data acquired from a visual sensor, for example, at least one video camera. The visual sensor captures the image data which depicts the user and preferably the at least one object currently involved in the task.

A close cooperation between the user and the assistance system is achieved. The assistance system mirrors traditional cooperation between human workers acting together, for example, using speech as a typical communication channel for negotiating a shared workflow when performing a task. The cooperation with the assistance system is therefore intuitively understandable for the user. This is in particular the case because the entire task is divided into individual steps and/or subtasks. The subtasks may each consist of a plurality of steps. The representation of the entire task defines the relation of the individual subtask and/or steps and therefore is not limited to a step-by-step sequence having a strict timely order.

The assistance system acquires and interprets verbal and nonverbal communication from the user to the assistance system. Therefore, the assistance system advantageously reduces the time and effort needed by the user for training to cooperate with the assistance system.

The processor of the system, according to an embodiment of the invention, is configured to generate the support signal including information on manipulating the object or part of the object comprising handing the at least one object to the user or fetching the at least one object from the user. Such an object may in particular be a tool or a spare part, and it is evident that a plurality of objects may be handed or fetched.

The system according to an advantageous embodiment includes the processor configured to determine the at least one object or part of the object required in a currently executed step of the task based on combining the obtained user input with the generated internal representation of the task.

The system, in particular the processor, is configured to predict the at least one object or part of the object required in a future step, in particular a step to be executed next in time to the current step, based on combining the obtained user input with the generated internal representation of the task.

Using the structured internal task representation and the sensed information on the current task environment and generating suitable assist information in the support signal enables the assistance system to control the robot to contribute with foresight and helpful actions to a cooperative workflow in performing the task together with the user. The robot will autonomously, or at least partially autonomously assist the user, who does not have to trigger all future actions or information output by commands.

The processor can be configured to generate the support signal based on the internal task representation and to output in the support signal information on how to perform a current step.

The processor can be configured to obtain unstructured knowledge source data on at least one task which is similar to the task to be performed, and analyze the obtained unstructured knowledge source data on the at least one similar task for generating the internal representation of the task to be performed. In order to decide whether the task is similar, a similarity comparison is performed. This may be done by counting a number of steps that do not need adaptation and divide this number with an entire number of steps necessary. This can be done for a plurality of potential tasks. The task with the highest ratio will be considered to be a similar one.

The capability to obtain further unstructured knowledge source data concerning similar tasks to the current task and to evaluate this further unstructured knowledge source data significantly extends the entire knowledge database available to the assistance system and the number of tasks, which can be addressed in cooperation between the assistance system and the user. One particular advantage is that harvesting unstructured information to generate an internal representation on a task allows generating such representations even without a user or operator programming the system.

The generated internal representation of the task may include at least one hypothesis on how to perform the current task in an embodiment. Thus, such a representation may be used for a task that is not precisely described by the representation but shows a certain similarity.

According to an advantageous embodiment, the processor of the system may be configured to apply a weight to the at least one hypothesis based on the user input relating to at least one of: the task to be performed, the object(s) involved in the task, a time sequence of involvement of the object(s), and the acquired image data.

Advantageously, the processor is configured to provide the at least one hypothesis together with a confidence value assigned to the at least one hypothesis in the output signal to the user.

This enables the user to assess a probability of a correct recommendation by the assistance system. This is particularly useful if the system and the user are training to cooperate on tasks and the assistance system possibly relies on unstructured task knowledge for tasks similar to the task currently performed.

The system, in particular the processor according to an advantageous embodiment, may be configured to generate and output a step-by-step instruction (systematic instruction) for performing the task included in the internal representation of the task. This is particularly useful to assist a user who is generally capable of performing the task, but who is not well experienced.

Alternatively or additionally, the task input unit of the system can be configured to retrieve visual information on the task from any source, for example, the internet. The processor is configured to provide the retrieved visual information in the output signal to the user. The processor of a particularly advantageous embodiment is configured to extract the visual information from a description of the task or to perform an image search using a web search machine and keywords relevant to the task. Generally, the system is capable to combine information from a plurality of sources, for example, more than one description of a task, when generating the internal representation.

The assistance system is able to enhance the unstructured knowledge database concerning the task and to provide visual information to a user, which traverses limitations imposed by limited language skills of different users and limitations of the system to verbally describe complex shapes, manipulations or arrangements of objects.

Alternatively or additionally, the processor may be configured to generate and output in the output signal feedback information on at least one of task progress and task success.

The assistance system thereby motivates the user to proceed with the task and provides additional overview of the entire process generated internally in the assistance system in form of the internal representation to the user. The user gains an additional overview of the current state of the task execution.

The processor in another embodiment of the system is configured to generate the feedback information based on comparing the retrieved visual information with the acquired image data.

This enables to improve the task knowledge and the current situation assessment of the assistance system. The acceptance of the assistance system for a user is therefore improved.

The method for assisting a user in fulfilling a task according to the second aspect of the invention is performed in an assistance system comprising a human-machine interface unit for communicating with the user, a processor, and a task input unit. The method comprises steps of obtaining by the task input unit unstructured knowledge source data on the task, of analyzing by the processor the obtained unstructured knowledge source data and generating an internal representation of the task. In a step of interpreting, the processor interprets a user input obtained by the human-machine interface unit. The processor then monitors a progress in performing the task by interpreting at least one of the user input and image data and generates a support signal based on the generated internal representation and the monitored task progress. The processor outputs the generated support signal, wherein the support signal comprises information on manipulating at least one object or information on how to perform the task.

The computer program according to a third aspect includes program-code means and is adapted to execute the steps of the assistance method according to the second aspect, when a computer or digital signal processor executes the program.

The description of various embodiments of the invention refers to the enclosed figures, in which
- FIG. 1: depicts an overview of functional units of an assistance system according to an embodiment of the invention,
- FIG. 2: depicts a graph showing states and transitions for belief tracking for the assistance system according to an embodiment,
- FIG. 3: shows a flowchart of an assistance method according to an embodiment, and
- FIG. 4: shows structural units of the assistance system according to an embodiment.

Same reference signs in the figures refer to the same or corresponding elements. The description of the figures avoids repetition of a discussion of elements with the same reference signs, where it is deemed possible without adversely affecting comprehensibility in order to provide a concise discussion of the embodiments.

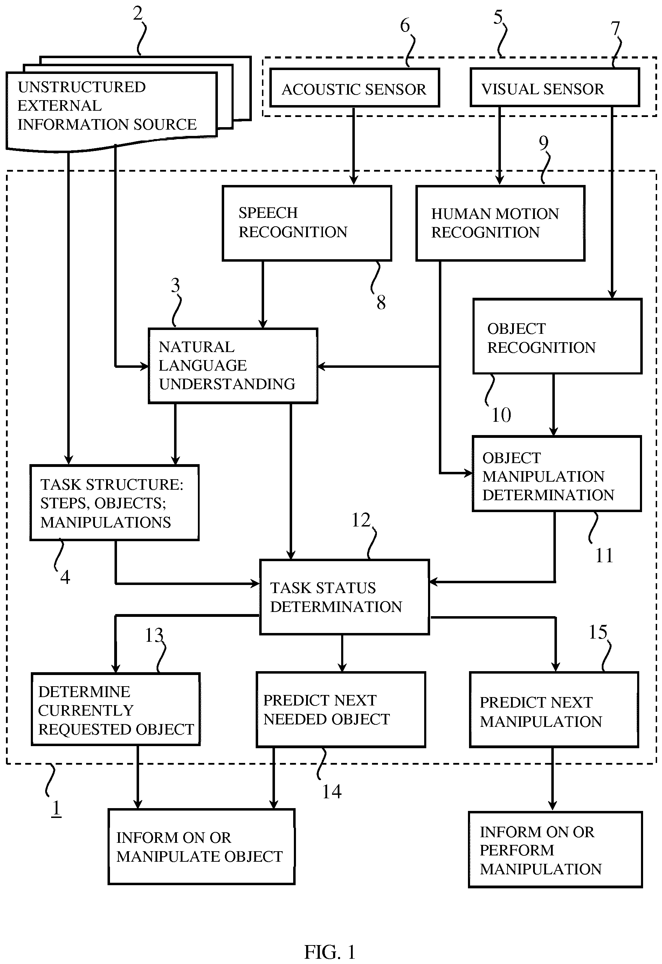

Fig. 1 provides an overview of functional units of an assistance system 1 according to an embodiment.

The assistance system 1 may form part of a machine capable of carrying out a complex series of actions in an automated manner (robot). The robot may operate in an autonomous or semi-autonomous mode of operation.

The robot may comprise at least one robotic arm with an effector (manipulator) adapted to perform physical actions, for example, gripping, grasping, reaching, or pointing. The robot may also include means for outputting information acoustically or visually in the form of speech, acoustic signals, light signals, images or even video clips. Examples for these means for outputting information include loudspeaker assemblies, display screens, or smart appliances such as wearables.

The assistance system 1 acquires information in form of unstructured knowledge source data from an unstructured external information source 2. Unstructured knowledge source data is knowledge source data prepared for humans and therefore specifically adapted for human perception capabilities such as vision and speech, contrary to programmed instructions readable for electronic machines using a specific coding.

The unstructured external information source 2 may include, for example, training videos, and results acquired using keyword searches via the internet or an intranet.

A unit for natural language understanding 3 may provide a specific capability to interpret speech information received from the unstructured external information source 2.

The results from the unit for natural language understanding 3 and the unstructured knowledge source data acquired by the unstructured external information source 2 are provided to a unit for task structuring 4. The unit for task structuring 4 analyzes the input information and generates an internal representation of the task. The internal representation of the task may comprise elements such as the task to be performed, a task context, subtasks, steps, sub-steps, objects involved in the task, parts of these objects, tools, manipulations, as well as communication parameters such as gazes, speech portions, and state variables such as a robot state, a human state, a task environment state, each associated with the structural elements of the task.

The generated internal representation is a core element of the assistance system 1 and provides a structure for the previously unstructured knowledge source data.

A human-machine interface unit 5 may include at least one of an acoustic sensor 6 and a visual sensor 7. A simple example for the acoustic sensor 6 is a microphone. An example for the visual sensor 7 is a camera acquiring still images and/or videos from a task environment. The task environment includes a user of the assistance system, objects involved in the task, tools involved in the task, and (autonomous) systems such as a robot cooperating with the human user.

It is to be noted that the human-machine interface unit 5 may be arranged fully or at least in parts spatially separated from other elements, such as a processor of the assistance system 1.

Acoustic data acquired by the acoustic sensor 6 and image data acquired by the visual sensor 7 may, although not shown in figure 1, also provide input data for the unit for task structuring 4.

Acoustic data acquired by the acoustic sensor 6 is fed to a unit for speech recognition 8. Image data provided by the visual sensor 7 is fed to the unit for human motion recognition 9.

Speech data generated by the unit for speech recognition 8 as well as motion data generated by the unit for human motion recognition 9 may further improve the results provided by the unit for natural language understanding 3. The image data obtained by the visual sensor 7 is provided to the unit for object recognition 10. Information on recognized objects provided by the unit for object recognition 10 as well as information on human motion provided by the unit for human motion recognition 9 forms an input for the unit for object manipulation determination 11. The unit for object manipulation determination 11 is adapted to generate data on a current object manipulation in the task environment. Information on the determined current object manipulation in combination with information of natural language provided by the unit for natural language understanding 3 enables the task status determination unit 12 using the task knowledge provided in the internal representation of the task generated by the unit for task structuring 4 to determine an actual task status in the current task.

The current task status provided by the task status determination unit 12 may in particular enable the assistance system 1 to determine a currently requested object in the unit for determining a requested object 13. The requested object may be, for example, a spare part or a required tool.

The current task status determined in the task status determination unit 12 may further serve to predict the next needed object in the unit for predicting a required object 14. The unit for predicting a required object 14 enables the assistance system to prepare a next subtask, step, or next sub-step while the user and the robot are performing the current subtask, step or sub-step. Finally, the task status determination unit 12 determines and provides input information for a unit for predicting the next manipulation 15. The unit for predicting the next manipulation 15 enables to generate a support signal, which triggers informing on the subsequent manipulation to the current manipulation or triggers performing the next manipulation.

The functional structure of the assistance system 1 shown in fig. 1 is only one example and may be further refined in other embodiments of the assistance system 1.Additionally, the results of the unit for object recognition 10 may provide input to the unit for task structuring 4, thereby enhancing the information on natural language understanding provided by the unit for natural language understanding 3. This enables to refine the internal representation of the task by information on characteristic communication as used by the specific user and to learn task structures of a current task from similar task structures and their previous execution in cooperation with the user. Further, this enables the internal representation to be adapted for different users.

The information determined and generated in the unit for determining the currently requested object 13 and the information being generated by the unit for predicting the next required object 14 may be provided in the support signal and output by the assistance system 1. This information informs the user on the objects involved in the current step or sub-step of the task, or triggers manipulating an object of the task by the robot.

The support signal may be provided to the means for outputting information that may include at least one loudspeaker assembly, display screen, or smart appliances such as a wearable. The means for outputting information may form part of the robot. Additionally or alternatively, the means for outputting information can be part of the assistance system 1, for example, included in the human interface unit 5. The means for outputting information generate a signal visually or acoustically perceivable by the user.

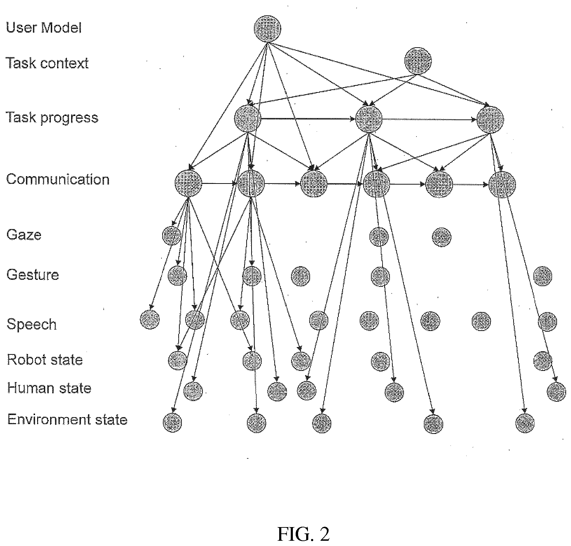

Fig. 2 depicts a graph showing states and transitions for belief tracking for the assistance system 1 according to an embodiment.

Belief tracking of a current task progress, of a communication state between the assistance system 1 and the user, and of a human state (user state) provides an effective measure of extracting general knowledge about the task on the one hand and of the current state in performing this task from the unstructured knowledge data and the user input and image data on the other hand.

Belief tracking further enables a personalization of the communication between the assistance system 1 and the user by learning particular characteristics of the interaction of the user with the assistance system 1.

The assistance system 1 structures the task in a plurality of subtasks and extends beyond the subtask independent tracking as disclosed, for example, in "Interpreting Multimodal Referring Expressions in Real Time" by Whitney D, et al, International Conference on Robotics and Automation (ICRA) 2016, Stockholm, May 16 to 21, 2016. This prior art system also gathers information on the task from unstructured knowledge sources, in this case cooking recipes. However, the prior art system only identifies objects needed for the task from the knowledge sources, i.e. ingredients. It does not structure the task in subtasks and/or steps, and is hence not able to support the user based on the progress in the task, i.e. the current subtask and/or step.

The upper two layers of fig. 2 disclose elements representing a user model and a general task context. Structuring the task into subtasks is specific to the applied belief tracking. This, in particular, enables tracking a task progress.

Communication in the employed modelling may use the parameters gaze, gesture, and speech.

The state parameters may refer to at least a robot state, a human state of the user, and a state of the task environment.

The assistance system 1 can track beliefs on a current task. A trivial possibility for tracking the current task to be performed may be done by interpreting a speech of the user announcing the current task.

A respective tracking is additionally performed on the current subtask, too. The current subtask could be tracked by monitoring the user's acoustic announcement, e.g., referring directly to the current subtask or indirectly via referring to the tools and parts needed in the subtask. Additionally or alternatively, the assistance system 1 may interpret a gesture of the user, for example, pointing to a specific object, a certain tool to or a specific pose of the user for tracking the current subtask.

The assistance system 1 tracks the communication of the user with the assistance system 1. Communication may comprise audible communication via speech, or visually perceivable communication via gazes, gestures such as pointing, reaching movements for an object or part of an object such as a tool.

Gazes may be determined by eye tracking.

The assistance system 1 can further track beliefs on the current involvement of the user in performing the task. The assistance system 1 may take into account a state of the user, a state of the environment in which the task is to be performed, and a state of the robot including the assistance system 1 and collaborating with the user in performing the task.

The assistance system 1 may further track beliefs on human preferences of the user collaborating with the robot including the assistance system 1.

The inventive approach may integrate several unstructured knowledge sources for generating the internal representation of the task using belief tracking, e.g., hierarchical belief tracking. The knowledge sources may include different communication modalities, for example, acoustic (oral) communication such as speech, visual communication via gaze, communication based on gestures such as pointing, grasping, reaching, etc. The knowledge sources may include context information on the task based on task knowledge from manuals, videos, technical documentation, pictures, etc.

The knowledge sources may provide semantic knowledge provided by external sources on word semantic ontologies or word embedding.

A further knowledge source provides information on human preferences, for example, concerning the current user cooperating with the assistance system 1, and which is acquired during a previous sub-step of a current task, a similar, or even a same sub-step while performing a similar or the same task previously.

An advantageous element of the belief tracking used in present invention is integrating multiple modalities, such as oral and visual communication, for monitoring task progress and/or for resolving different references to objects. This provides a high degree of confidence for a recommended action provided in the support signal to the user even in a complex task structured in a plurality of subtasks.

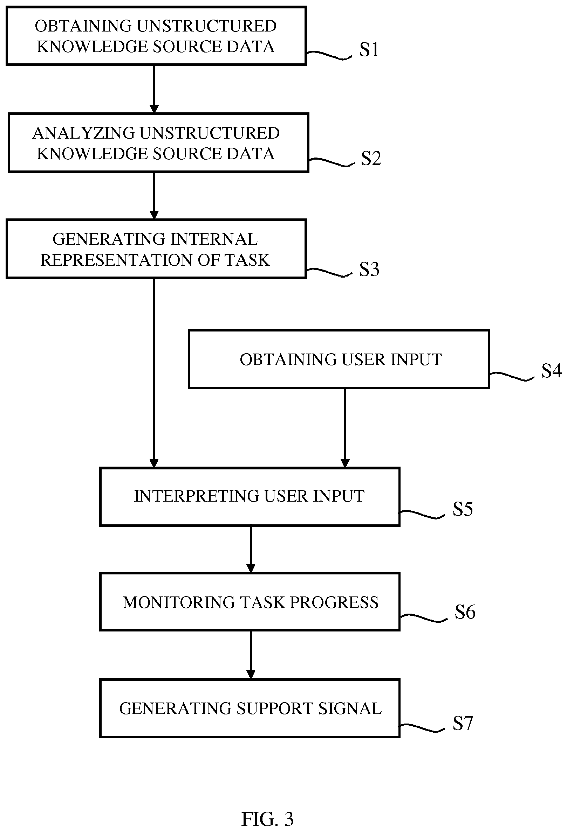

Fig. 3 shows a flowchart of an assistance method according to an embodiment of the invention.

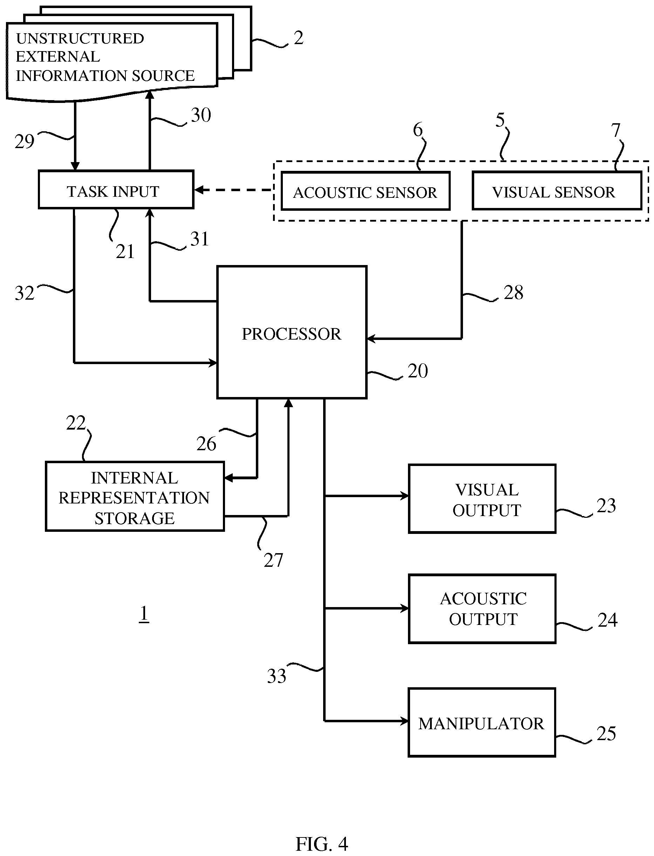

The assistance method is to be performed by the assistance system 1 comprising the human-machine interface unit 5 for communicating with the user, a processor 20, and the task input unit 21, as shown in fig. 4.

The method starts with a step S1 in which unstructured knowledge source data is obtained from unstructured external information sources 2.

In a subsequent step S2, the processor 20 analyzes the obtained unstructured knowledge source data obtained in step S1. Based on the analysis of the unstructured knowledge source data, the processor 20 generates an internal representation of the task in a subsequent step S3.

The processor 20 provides the generated internal representation of the task to an internal representation storage device 22 for storing the internal representation.

The human-machine interface unit 5 obtains a user input in step S4. The processor 20 in a step S5 following to step S4 interprets the obtained user input. This enables the processor 20 to continue in a step S6 with monitoring task progress in performing the task by interpreting at least one of the user input and image data acquired by the visual sensor 7, for example.

In step S7, the processor 20 generates a support signal based on the generated internal representation of step S5 and the determined task progress of step S6.

The method steps S1 to S3 aim at generating and providing the internal representation of the task from unstructured knowledge source data and may be performed offline.

The method steps S4 to S7 apply the generated internal representation of the task for the current execution of the task. These steps are executed repeatedly in a loop during the task execution until the target of performing the task is achieved.

Fig. 4 shows structural units of the assistance system 1 according to an embodiment of the invention.

The inventive assistance system 1 is implemented preferably including a plurality of software modules running on a processor 20. The processor 20 has access to an internal representation storage device 22, which is a memory. The internal representation storage device 22 may be co-located with the processor 20 or maybe accessible for the processor 20 via a network. The internal representation storage device 22 stores the internal representation generated by the processor 20 and provides a specific internal representation stored in the internal representation storage device 22 together with a plurality of further internal representations in response to a request 26 for a specific internal representation to the processor 20. Thus, the processor 20 has access to the internal representation storage device 22 to receive internal representation data as indicated by arrow 27 in fig. 4, including, for example, a specific internal representation for performing the current task or a task similar to a current task from the internal representation storage device 22.

The human-machine interface unit 5 provides visual and acoustic environment data 28 to the processor 20. The human-machine interface unit 5 may, in particular, include the acoustic sensor 6, for example a microphone, and the visual sensor 7, for example a camera.

The assistance system 1 further includes a task input unit 21. The task input unit 21 obtains unstructured knowledge source data 29 from unstructured external information sources 2. The unstructured knowledge source data 29 may be obtained by the task input unit 21 in response to an external information request signal 30 provided by the processor 20 via the task input unit 21.

The information request signal 30 may include keywords for a web-based search for unstructured external information source data 29 related to the task to be performed by the assistance system 1 in cooperation with the user.

The user may initiate a search for unstructured external information source data 29 using the user input unit 5. Then, the processor 20 provides a respective external information request 31 to the task input unit 21.

The task input unit 21 relays any unstructured knowledge source data 29 obtained from unstructured external information source 2 to the processor 20. This may also include unstructured knowledge source data 29 acquired from the user input unit 5 as indicated by the dotted arrow in fig. 4.

The processor 20 generates a support signal 33 based on the internal representation obtained from the internal representation storage device 22 and the monitored (determined) task progress in performing the current task, and outputs the separate signal 33 either via specific output means of the assistance system 1 or to other output means of the robot. Fig. 4 shows, as examples, a visual output unit 23, an acoustic output unit 24, and a manipulator 25, which form part of the assistance system 1.

The assistance system 1 is in particular advantageous in an application such as car repair scenario, in which the user is a technician, which cooperates with the assistance system 1 in order to perform a repair task on a car. It is evident that the car repair scenario is transferable to any other repair or even manufacturing scenario for other technical objects in the automotive area or beyond.

When analyzing unstructured data from external sources like written or video instructions intended for a technician and provided by vehicle OEM and additionally or alternatively written or video instructions by a layman, for example, iFixit.org, the system identifies a task using a semantic analysis of headings of the description or title of the video, the complete text of the description, or the audio signal (particularly the speech included in the audio signal) and the video signal in the video.

Further, this task is then segmented into subtasks, steps, and/or sub-steps as discussed above. For identifying different and succeeding segments of the task, an analysis of the description in the manual is performed. In many cases, it is possible to distinguish between different steps, which are even mentioned as step 1, step 2, and so on in the manual.

Furthermore, a semantic analysis of the description in the manual is performed, e.g., distinguishing terms such as open/remove vs. clean/insert vs. close/reassemble and so on. It is to be noted, that by the analysis of the manual or the video, the assistance system 1 also gathers knowledge about tools and objects that are needed in each of the subtasks.

Additionally or alternatively, it is possible to actively input dedicated information, for example, a curated list of possible tools and parts for the task, and thereby enhance the internal representation. Semantic analysis of the manual (or other unstructured data) comprises an analysis of words with respect to their meaning in the context of the current task. In case of videos or observations acquired by the visual sensor 7 depicting a user while fulfilling the task, the gestures of the acting person will be analyzed. Semantic analysis can be based on mapping words or gestures to a category based on external ontology, for example WordNet. The semantic analysis can be based on mapping the representations of two different words/gestures or the like. This can be done based on word embedding.

Once the assistance system 1 has gathered all the information indicated above, the internal representation is generated (built), in which the different subtasks, objects, and actions that need to be performed are linked. The use of such a representation defining links between subtasks, steps, sub-steps, objects and actions allows for flexibility in the order of subtasks, steps, and sub-steps. Such flexibility significantly increases usability of the suggested assistance system 1 because not every worker or user may perform everything in the same order. Thus, using the internal representation being defined via the links (relations) enables deviation from a strict order of the subtasks, which would be typical for known assistance systems relying on pre-programmed task information. Using the internal representation instead of the detailed description, furthermore, allows the use of tools and parts in each subtask to slightly vary between different human users. This can be achieved by using a probabilistic representation, for example, by Bayesian networks (Markov Chain, HMM, CFR, ... ) or a recurrent neural network (LSTM) for the internal representation.

It is to be noted that the robot or more generally the assistance system 1 has to understand speech and gestures using the built-in acoustic sensor 6 or visual sensor 7. The visual sensor 7 may also be used in order to perform eye tracking of the user in order to identify a current focus of attention of the user.

The assistance system 1 is also able to recognize objects via the visual sensor 7. Algorithms for detecting objects that are captured by a camera are known in the art and can also be used for the visual sensor 7 of the assistance system 1. Further, in order to assist a user in fulfilling his task, the robot has a manipulator to handle objects. Such objects in an application of a car repair scenario may, for example, be spare parts, which are handed to the robot, but also tools that are needed by the user, like screwdrivers, wrenches or the like.

After a particular task has been identified by collecting respective information and the task has been segmented into subtasks, steps, and/or sub-steps, the assistance system 1 is aware which subtasks, steps, and/or sub-steps are to be fulfilled in order to achieve the final target of the task. Thus, if by observing the user and communicating with the user it can be determined that a certain progress is achieved, the assistance system 1 may also suggest the next steps that need to be done. Usually, the user guides the system through the subtasks in order to achieve the final target. In case that the user is unable to remember the next steps, information on how to continue the task may be given by the assistance system 1.

When the system has knowledge on the task, which is achieved by analyzing unstructured information and generating the internal representation as explained above, and the task is segmented into subtasks, steps, and/or sub-steps, the robot can successfully cooperate with a worker. This is achieved by using a belief tracking of task progress, communication state as well as the human state. Further, personalization of the communication can be achieved by learning user characteristics. This learning may be based on observation of user actions/user behavior, which can be recognized from observing the actions of the user by the built-in camera and using the microphone. By using the microphone, for example, the user can actively give information to the robot regarding the actual subtasks, steps, and/or sub-steps to be fulfilled, or indicating or triggering a certain assistance event like for example handing over a specific tool. Belief tracking allows having a flexible arrangement of the time sequence of different subtasks.

Once the assistance system 1 cooperates with a user or technician, it is possible to perform a system adaptation. System adaptation is achieved based on an analysis of the task execution by the user. For example, by observing gestures and actions performed by the user or even analyzing spoken comments from the user, an order of subtasks may be determined. It may be determined further, which tools and parts are used in which order. Thus, the assistance system 1 is capable to associate the probability for a certain order of subtasks to the subtasks from such observation.

When identifying the current situation to correspond to either one of the subtasks, steps, and/or sub-steps, it is thus possible to use knowledge about such probability for specific subtasks at that moment. This will lead to an adaptation of the task representation based on the observed behavior of the user. Further, it is possible to adapt the assistance system 1 not only to one individual user but also to a plurality of different users. For each of the different users, an adapted task representation may be stored in the internal representation storage device 22 and after identifying a specific user or technician, the assistance system 1 will acquire a dedicated internal representation of the identified user from the internal representation storage device 22. The assistance system 1 will use the acquired dedicated task representation of the identified user thereafter.

Before explaining more specific examples illustrating how the inventive assistance system 1 and the assistance method work, the concept of the cooperation between a robot and a worker shall be explained once more:
The basic idea of the inventive assistance system 1 is that the assistance system 1 supports the user in his task and, based on its specific knowledge of the user, environment, and task, tries to follow the line of thought of the user and even thinks ahead. This is possible because the assistance system 1 itself acquires, generates, and stores structured knowledge about the task, subtask, steps, and/or sub-steps that are needed in order to achieve the final goal.

Further, the context knowledge of the assistance system 1 will allow the user to interact with it as with an experienced colleague who knows the task and the user. Control of the assistance system 1 and the task execution remains with the user himself. To achieve that, the user controls which subtasks, steps, and/or sub-steps will be executed and when the subtasks, steps, and/or sub-steps will be executed. The assistance system 1 does in general not suggest to the user what he should do next but rather adapts to his personal approach to the task. In case that the user is unsure how to continue the task, he may even actively ask the assistance system 1. The assistance system 1 will then be able to answer by generating and outputting the respective support signal. The answer bases on the assistance system's 1 own task knowledge contained in the internal task representation and the assistance system's 1 estimation of the current state in the completion of the task.

The system tracks beliefs on the current task, current subtasks, steps, and/or sub-steps, communication, current human involvement in the task, and user preferences. In case that the user announces the current task, steps, and/or sub-steps, tracking belief on the current task is trivial.

One specific example of a corporation between assistance system 1, the robot, and the user on a task is repairing a vehicle injection system. The task "repairing vehicle injection" can be segmented into subtasks like, for example:
- remove components blocking access to injection,
- remove injection,
- repair injection,
- put injection back, and
- put other components back.

Such a task frequently occurs in a car repair workshop, but its execution shows variations, for example depending on the individual technician performing the task. The main subtasks may appear to be the same, but are different in detail for different car models and/or different preferences of the technician how to pursue the subtasks. When the technician is pursuing the subtasks, he will be assisted or supported by pick and place operations that are performed by the robot based on the support signal output by the assistance system 1. Thus, the robot and the technician share the same workspace but do not necessarily execute a joint manipulation. Further, it is possible that the user or technician commands the assistance system 1 in order to achieve finegrained control of the system. For example, while the robot lifts a tire, the technician might say: "lift the tire more to the top left".

Initiating the cooperation on a task pursued cooperatively may be controlled by the user as well. For example, the technician announces the overall task to the robot. In the example of the car repair workshop, this might be the command: "repair injection". During the task execution, the technician may also request certain tools and parts. On the one hand, this is an indication of the task progress and the currently executed subtask, steps, or sub-steps. On the other hand, this is an assistance of the robot by the technician because the robot tries to determine which of the tools or parts shall be handed over to the technician next, based on probabilities for use of a specific tool or need of a specific part.

It is also possible that the assistance system 1 identifies the task by mapping the tools and parts that are currently present in the working environment. This mapping is possible because the assistance system 1 has knowledge about the tools and parts that are involved in execution of the task as they form part of the internal task representation. When the assistance system 1 identifies a tool, which is needed for the current task or which is needed for the current subtask, this tool will be assigned a higher probability.

The assistance system 1 will also update its estimation of the current subtask or currently executed step within a task or subtask based on the interaction with the user. Such an update can be based on the tools and objects referred to by the user. Consequently, it is important in which temporal order the user will use the references. When updating the estimation, the assistance system 1 will observe the manipulations performed by the technician, for example, using its built-in visual sensor 7.

The aforementioned examples and given explanations refer to a robot including the assistance system 1. However, it is also possible to use a distributed assistance system 1. For example, the visual sensor 7 or the acoustic sensor 6 do not necessarily need to be arranged on the robot itself but may be any surveillance camera and respective microphone, and also the processing may be done using plural processors arranged for example in a server instead of a single processor 20 mounted in the robot.

The function of the robot may be reduced to perform pick and place operations in order to hand over or take over an object or tool based on the output support signal generated by the assistance system 1.

In the following, further detailed examples of embodiments of the invention are discussed in more detail. The discussion of the embodiments focuses on the extraction of task knowledge from semi-structured and unstructured data in the unstructured external information source 2. Depending on the concrete scenario, several manual steps might be necessary to prepare this extraction of task knowledge. For known, repetitive scenarios, these steps may be automated as well. In a concrete implementation of the invention, a trade-off between the effort necessary to automatize most of the steps using well-known text processing methods and the effort for the manual preparation might be thought of. It has to be noted that these manual preparations are not necessary for each individual task but will allow the processing of a large group of tasks. How this can be achieved will be highlighted in each of the examples.

A first example of an embodiment of the invention describes how the invention may support a user in the repair of an electronic device. The described example is a replacement of the battery of an Apple iPhone 6. Different internet resources exist as unstructured external information sources 2, which describe how this has to be performed. A well-known resource is the website iFixit.org. This website provides step by step descriptions for humans how to perform these repairs. The website uses HTML formatting, which is replicated below in an abstract way to highlight how the formatting helps to extract the desired information. The website also suggests to the information creator to enter the information in a structured way as suggested by the editing environment of the website. In this sense, the information presented on iFixit.org can be considered as semi-structured. Parts of the text not relevant to highlight how the information can be extracted are not repeated for sake of conciseness.

The unit for task structuring 4 analyzes the input information and generates an internal representation of the task.

In a first step, the user can state to the assistance system 1 what kind of repair he wishes to perform, e.g., the user states "I want to replace the battery of an iPhone 6". The assistance system 1 obtains in step S4 this user input and then interprets in step S5 the obtained user input.

Many methods have been proposed in the literature and commercial systems exist to determine an intent of the user, i.e., the wish to replace a part in the entity under consideration, i.e., in present case the battery of an iPhone 6 (Young, T., Hazarika, D. Poira, S., & Cambria, E., (2018). Recent trends in deep learning based natural language processing. IEEE Computational Intelligence Magazine, 13(3), 55-75; Kurata, G., Xiang, B., Zhou, B. &Yu, M. (2016). Leveraging sentence level information with encoder LSTM for semantic slot filling. arXiv preprint arXiv: 1601.01530; Liu, B., & Lane, I. (2016). Attention-based recurrent neural network models for joint intent detection and slot filling. Retrieved from http://arxiv.org/abs/1609.01454).

In an alternative implementation, the appearance of the words in the user's query can be determined in all repair manual titles and a manual with sufficient match can be selected from the repair manual titles. These methods can be used to automatically select one or several repair manuals, which fit the user's request. An example of a possible match to the user's statement "I want to replace the battery of an iPhone 6" is shown below:

```
      <title> Replacement Of An iPhone 6 Battery </title>
      ...
      Difficulty </p>
      Moderate </p>
      ...
      Steps </p>
      4</p>
      ...
      Time Required </p>
      15-45 min </p>
      ...
      Sections </p>
      <u1 class = "sections-list">
      <li> Pentalope Screws</li>
      <li> Opening Procedure </li>
      <li> Front Panel Assembly </li>
      <li> Battery</li>
      </ul>
      ...
      <div class=" introduction">
      <h2>Introduction</h2>
      ...
      <div class="tools-list">
      <h3>Tools</h3>
      ...
      <span class="itemName" itemprop="name">Spudger</span>
      ...
      <span class="itemName" itemprop="name">P2 Pentalobe Screwdriver iPhone</span>
      ...
      <span class="itemName" itemprop="name">Suction Cap</span>
      ...
      <span class="itemName" itemprop="name">Tweezers</span>
      ...
      <\div>
      ...
      <div class="parts-list">
      <h3>Tools</h3>
      ...
      <span class="itemName" itemprop="name">iPhone 6 Replacement Battery</span>
      ...
      <span class="itemName" itemprop="name">iPhone 6 Battery Connector Bracket</span>
      ...
      <strong class="stepValue">Step 1</strong>
      Pentalope Screws
      ...
      <ul class="step-lines">
      <li class="icon-caution" itemtype="http://schema.org/HowToDirection">
      <div class="bullet bulletIcon ico-step-icon-caution"></div>
      <p itemprop="text">Prior to the disassembly, discharge
      the battery below 20% to avoid risks of fire and
      explosion from accidental puncturing it</p>
      </li>
      <li class="" itemtype="http://schema.org/HowToDirection">
      <div class="fa fa-circle bullet bullet_black"></div>
      <p itemprop="text">Remove the two 3.6 mm-long Pentalobe screws next to the Lightning
      connector. </p>
      </li>
      </ul>
      ...
      <strong class="stepValue">Step 2</strong>
      Pentalobe Screws
      ...
      <ul class="step-lines">
      <li class="" itemtype="http://schema.org/HowToDirection">
      <div class="fa fa-circle bullet bullet_black"></div>
      <p itemprop="text">Use a suction cup to lift the front panel: </p>
      </li>
      <li class="" itemtype="http://schema.org/HowToDirection">
      <div class="fa fa-circle bullet bullet_black"></div>
      <p itemprop="text">Press the suction cup onto the screen.</p>
      </li>
      </ul>
      ...
```

Thi example shows that this repair manual has a clear sequence of steps. Given that the repair manual is written in HTML, a computer can also easily parse this sequence of steps. The most relevant information to be extracted by the present invention is the tools and parts used in each step. This is facilitated by the fact that at the beginning of the repair manual a list is given of all tools and parts involved in the repair (<div class="tools-list">, <div class="parts-list">). The assistance system 1 may achieve segmentation of the repair manual into steps as each step in the repair manual is clearly indicated (e.g. <strong class="stepValue">Step 1</strong>) and additionally also a list of all steps is given at the beginning of the repair manual. To identify the tools and parts in each repair step it is in many cases sufficient to parse the list of tools and parts and then go from repair step to repair step and identify these tools and parts in each step. For parsing, the assistance system 1 may apply a simple pattern matching, i.e., keywords indicating the list of tools and parts and the segmentation into steps can be searched and then in each step a pattern matching between the tools and parts in the list and the words in each step can be performed.

The assistance system 1 can generate the internal representation of the task from the obtained unstructured knowledge source data in the repair manual in this way. Generating the internal representation contains a segmentation of the repair manual into steps and identifying the tools and parts used in each step.

In some cases, the names of the tools or parts might not be repeated in exactly the same way in the text of the steps as they were mentioned in the list. In the example above, the list refers to the "P2 Pentalobe screwdriver" whereas in step 2 it is mentioned "Remove the two 3.6 mm-long Pentalobe screws". A basic text search is not able to identify the "P2 Pentalobe screwdriver" in step 2. The assistance system 1 can achieve this by performing common text processing methods. On the one hand, also matches of parts of the tool mentioned in the tool list can be searched for, e.g., instead of "P2 Pentalobe screwdriver" just "Pentalobe screwdriver" or "screwdriver". To determine the most likely tool, these partial matches for the tool can be assigned a score each. It is, e.g., possible to give a higher score to matches that have more words in common with the tool mentioned in the list.

Alternatively, the score might also depend on the frequency of the word in the current repair manual, all repair manuals or some external text source (e.g. Wikipedia). In this case, less frequent words might receive higher scores. Furthermore, a stop list can be supplied to exclude words, which are very frequent or not related to tools and parts, e.g., "a" or "the". In some cases, the tool is referred to by its usage via a verb or the object, which is manipulated by the tool, e.g., "screwdriver" by "screw" (verb or noun), "loosen" or "tighten". These mappings can be resolved via an ontology that represents these links. This ontology can map tools directly to objects and actions but can also be hierarchical to represent classes of tools (e.g. "screwdriver" maps to "slot screwdriver" and "Phillips screwdriver") or actions (<loosen a screw> maps to "loosen", "screw open"), which then relate to each other. This can comprise several levels of hierarchy and interconnections on all levels. Such an ontology can be prepared manually.

Additionally, existing internet resources can be used to build such an ontology, e.g., WordNet maps "screwdriver" to "S: (n) screwdriver (a hand tool for driving screws; has a tip that fits into the head of a screw)" and "screw" to "S: (n) screw (a simple machine of the inclined-plane type consisting of a spirally threaded cylindrical rod that engages with a similarly threaded hole)", "S: (v) screw (turn like a screw)", "S: (v) screw, drive in", "S: (v) screw (tighten or fasten by means of screwing motions)".

Furthermore, known machine learning approaches can be applied to extract the tools and parts when generating the internal representation of the task. This can be achieved by annotating a training dataset of repair steps with the tool used. Many machine learning methods capable of performing this task exist, e.g., Long Short-Term Memory (LSTM) networks (Young, T., Hazarika, D., Poira, S., & Cambria, E. (2018). Recent trends in deep learning based natural language processing. IEEE Computational Intelligence Magazine, 13(3), 55-75, Lample, G., Ballesteros, M., Subramanian, S., Kawakami, K., & Dyer, C. (2016). Neural Architectures for Named Entity Recognition. Retrieved from http://arxiv.org/abs/1603.01360).

The performance of such methods can be improved by using word embeddings which are capable to generalize the results to semantically related words (Mikolov, T., Sutskever, I., Chen, K., Corrado, G. S., & Dean, J. (2013). Distributed representations of words and phrases and their compositionality. In: Advances in neural information processing systems (pp. 3111-3119), Pennington, J., Socher, R., & Manning, C. (2014). Glove: Global vectors for word representation. In: Proceedings of the 2014 conference on empirical methods in natural language processing (EMNLP) (pp. 1532-1543), Athiwaratkun, B., Wilson, A. G., & Anandkumar, A. (2018). Probabilistic FastText for Multi-Sense Word Embeddings. In: Proc. ACL 2018).

Using the techniques described above, the assistance system 1 can arrive at a representation for the tools and parts needed in each step for executing the method. To support the user in a repair task, it is also necessary to keep track of the step currently performed by the user. In its simplest implementation, the assistance system 1 will hand the tool needed in the first step to the user and then continue to prepare and hand tools to the user in the order extracted from the repair manual and included in the internal representation of the task.

Preferably, the assistance system 1 is also able to receive the tools no longer needed by the user and store the tools no longer needed in their corresponding place.

Additionally or alternatively, the assistance system 1 determines the current state of the repair, i.e., in which step the repair is, for example, based on the user's verbal and gestural feedback and/or the objects the user is currently manipulating, as obtained by the human interface unit 5.

The verbal feedback of the user can be interpreted by the methods mentioned above.

Many methods are known to interpret the user's gestural feedback, for example as disclosed in Mitra, S., & Acharya, T. (2007). Gesture recognition: A survey. IEEE Transactions on Systems, Man, and Cybernetics, Part C (Applications and Reviews), 37(3), 311-324; Rautaray, S. S., & Agrawal, A. (2015). Vision based hand gesture recognition for human computer interaction: a survey. Artificial Intelligence Review, 43(1), 1-54). Furthermore, methods exist to identify tools (Fischer, L., Hasler, S., Deigmöller, J., Schnürer, T., Redert, M., Pluntke, U., Nagel, K., Senzel, C., Richter, A., Eggert, J. (2018). Where is the tool? - grounded reasoning in everyday environment with a robot. In: International Cognitive Robotics Workshop (CogRob). CEUR Workshop Proceedings; Xiang, Y., Schmidt, T., Narayanan, V., & Fox, D. (2017). PoseCNN: A convolutional neural network for 6d object pose estimation in cluttered scenes. arXiv preprint arXiv:1711.00199; Calli, B., Singh, A., Walsman, A., Srinivasa, S., Abbeel, P., & Dollar, A. M. (2015, July). The ycb object and model set: Towards common benchmarks for manipulation research. In: Advanced Robotics (ICAR), 2015 International Conference on (pp. 510-517). IEEE) and detect which manipulation task a user is performing and which tools and object he manipulates (Leo, M., Medioni, G., Trivedi, M., Kanade, T., & Farinella, G. M. (2017). Computer vision for assistive technologies. Computer Vision and Image Understanding, 154, 1-15; Erol, A., Bebis, G., Nicolescu, M., Boyle, R. D., & Twombly, X. (2007). Vision-based hand pose estimation: A review. Computer Vision and Image Understanding, 108(1-2), 52-73; Poppe, R. (2010). A survey on vision-based human action recognition. Image and vision computing, 28(6), 976-990; Vishwakarma, S., & Agrawal, A. (2013). A survey on activity recognition and behavior understanding in video surveillance. The Visual Computer, 29(10), 983-1009; Herath, S., Harandi, M., & Porikli, F. (2017). Going deeper into action recognition: A survey. Image and vision computing, 60, 4-21; Carvajal, J., McCool, C., Lovell, B., & Sanderson, C. (2016, April). Joint recognition and segmentation of actions via probabilistic integration of spatio-temporal Fisher vectors. In: Pacific-Asia Conference on Knowledge Discovery and Data Mining (pp. 115-127). Springer; Borzeshi, E. Z., Concha, O. P., Da Xu, R. Y., & Piccardi, M. (2013). Joint action segmentation and classification by an extended hidden Markov model. IEEE Signal Processing Letters, 20(12), 1207-1210; Liu, H., & Wang, L. (2018). Gesture recognition for human-robot collaboration: A review. International Journal of Industrial Ergonomics, 68, 355-367; Keskin, C., Kiraç, F., Kara, Y. E., & Akarun, L. (2012, October). Hand pose estimation and hand shape classification using multi-layered randomized decision forests. In: European Conference on Computer Vision (pp. 852-863). Springer, Berlin, Heidelberg; Ge, L., Liang, H., Yuan, J., & Thalmann, D. (2018). Real-time 3D Hand Pose Estimation with 3D Convolutional Neural Networks. IEEE Transactions on Pattern Analysis and Machine Intelligence; De Souza, R., El-Khoury, S., Santos-Victor, J., & Billard, A. (2015). Recognizing the grasp intention from human demonstration. Robotics and Autonomous Systems, 74, 108-121. The method may interpret the user's gestural feedback additionally or alternatively using additional markers attached to the tool, i.e., following approaches disclosed in patent publication US 6 668 751 B1 or patent application publication US 2006/0074513 A1.

An integration of the observed information, i.e., human verbal and gestural interaction with the assistance system 1, as well as the tools and objects present and how they are manipulated, with the goal to track the state of the repair, can be based on the same methods used to track the progress of task-oriented dialogs, e.g., Partially Observable Markov Decision Processes (POMDP) (Williams, J., Raux, A., Ramachandran, D., & Black, A. (2013). The dialog state tracking challenge. In Proceedings of the SIGDIAL 2013 Conference (pp. 404-413); Williams, J., Raux, A., & Henderson, M. (2016). The dialog state tracking challenge series: A review. Dialogue & Discourse, 7(3), 4-33).

In one embodiment of the invention, a needed repair manual is not present in the database but at least one related repair manual can be retrieved. In this case, the identification of the relevant, i.e., related, manual(s) and the estimation of the tools needed in the next step might need to be dealt with differently and possibly jointly.

Relevant manuals can be determined by a comparison between the information provided by the user, i.e., the verbal instruction on the task in the preceding example on the one hand and information extracted from the manuals representing the unstructured knowledge source data.

Additionally or alternatively, manuals that are relevant to the task can be found by comparing the tool usage in the current repair task with the tool usage in the manuals found to be relevant so far. It can be assumed that a repair manual is the more closely related to the current task, the more the tools and parts used and their sequence of usage is similar to that of the current repair task. This requires of course some observation of the current repair task.

In a first step, the possibly relevant repair manuals can be selected based on the input from the user interpreted in step S5. The hypotheses on the tools and parts used in the first step of the repair manual that can be derived from the tools and parts used in the first step of the repair manuals are selected as relevant. For example, the tool that is used in most of the repair manuals in the first step is determined to be the most likely one, and the one that is used second most as second most likely one. After receiving feedback from the user or by observing the user's behaviour, the assistance system 1 can determine, if its prediction concerning the tool was correct and if not, which tool or part was used instead of the predicted tool. With this acquired knowledge, the assistance system 1 can formulate a hypothesis on which tool or part will be needed in the following step. The frequency counts of the usage of tools in the second step of the relevant repair manuals can now be weighted with an accuracy in predicting the tools and parts up to the current step during performing the method. This accuracy, e.g., can, be determined based on their Levensthein distance to the observed sequence. Details on the Levensthein distance for application in the present assistance method may be found in resources such as the entry "Levenshtein_distance" in the online encyclopaedia Wikipedia
(https://en.wikipedia.org/wiki/Levenshtein_distance). The Levensthein distance may then be used to change the set of repair manuals considered relevant to the current task by discarding those repair manuals with a high Levensthein distance and introducing new repair manuals with a low Levensthein distance.

In an alternative implementation, the prediction of the next tool and/or part is based on a machine learning approach, i.e., a sequence prediction algorithm using a Long Short Term Memory (LSTM) (Bengio, S., Vinyals, O., Jaitly, N., & Shazeer, N. (2015). Scheduled sampling for sequence prediction with recurrent neural networks. In: Advances in Neural Information Processing Systems (pp. 1171-1179)). The method can apply the machine learning approach for training on sequences of tools and parts in the internal representation of the task and will then be able to predict the next tool or part based on an observed sequence.

Alternatively, a hierarchical attention network (Yang, Z., Yang, D., Dyer, C., He, X., Smola, A., & Hovy, E. (2016). Hierarchical attention networks for document classification. In: Proceedings of the 2016 Conference of the North American Chapter of the Association for Computational Linguistics: Human Language Technologies (pp. 1480-1489)) can be trained on text in the different steps of the repair manuals and will then also be able to predict the next tool and/or part based on an observed sequence of steps, tools and/or parts.

An online resource as unstructured knowledge source data may have a large amount of datasets. I.e., the iFixit dataset contains approximately 50000 repair manuals. A very large portion of these repair manuals is edited in the same format as the example described above. Many of the manual steps described above therefore only have to be performed once and can then be used for a very large set of repair manuals due to the same or similar format in step S2 of analysing the unstructured knowledge source data of the assistance method. Some of the steps in the repair manuals might have to be adapted to different domains in which the current task is arranged, e.g., repair of electronic devices vs. mechanical vehicle repair.

Additionally, other internet resources describing repairs and other tasks also follow a very similar structure as they also base on the general format provided by schema.org. Hence, they can be exploited in a very similar way for carrying out the inventive assistance method.

Repair and maintenance manuals provided by OEMs to support and train workshop technicians typically are organized differently from the repair manuals provided by internet resources. OEM maintenance manuals can be provided as a PDF document. An example of an excerpt of a typical maintenance manual follows. The example arranges formatting information in brackets.
Driver-side airbag, removing and installing (bold)
WARNING! Follow all safety precautions when working on airbags page 722. (red) (figure detailing the relevant parts of the vehicle)
   1 - Steering wheel
      Removing page 782
   2 - Harness connector for spiral spring
   3 - Airbag unit
   4 - Multipoint socket
      Always replace
      62 Nm
   5 - Torx bolt (T30)
      8 Nm
   6 - Torx wrench (T30)
   7 - Spiral spring
Removing (bold)
WARNING! Follow all safety precautions when working on airbags page 69-40. (red)
   - Unbolt airbag unit using Torx wrench (T30).
   - Disconnect harness connector - 2 -.
   - Place airbag unit on appropriate surface with impact padding facing up.
Installing (bold)
WARNING! Make sure no one is in vehicle. (red)
   - Make sure harness connector - 2 - audibly engages (clicks).
   - Install airbag unit and tighten to 7 Nm (62 in. 1b).
   - Switch ignition on and connect battery Ground (GND) strap.

As can be seen from the example above, such OEM maintenance manuals typically also have an own format supporting the step S2 of analysing the unstructured knowledge source data. Yet it is characteristically less detailed than those obtained from internet resources, and is less well suited to be parsed by a computer. Nevertheless, parsing such a maintenance manual, segmenting the repair task into steps and extracting the tools and parts needed in each step can be achieved with standard text processing methods.

The different repair tasks are clearly set apart via a distinctive formatting. In the example above, a bold font is chosen. The text begins at the top of the page, a feature not reproduced in the example above. Furthermore, the presence of the relevant part in the text and the verb form indicate the heading ("airbag", "removing"). Hence, the method may perform a text search in step S2, which implements some simple rules, e.g., via regular expressions, and thereby can determine the title.

Additionally or alternatively, a machine learning approach can be applied where a classifier is trained on different annotated titles introducing a novel repair manual, and will then be able to detect novel titles, e.g., using methods as described in Aggarwal, C. C., & Zhai, C. (2012). A survey of text classification algorithms. In: Mining text data (pp. 163-222). Springer, Boston, MA; Lai, S., Xu, L., Liu, K., & Zhao, J. (2015, January). Recurrent Convolutional Neural Networks for Text Classification. In AAAI (Vol. 333, pp. 2267-2273); Young, T., Hazarika, D., Poira, S., & Cambria, E. (2018). Recent trends in deep learning based natural language processing. IEEE Computational Intelligence Magazine, 13(3), 55-75, Lample, G., Ballesteros, M., Subramanian, S., Kawakami, K., & Dyer, C. (2016). Neural Architectures for Named Entity Recognition. Retrieved from http://arxiv.org/abs/1603.01360.

During the analysis of the unstructured knowledge source data, the individual steps and sub-steps can be identified based on their formatting and verb usage, i.e., bold face and the verb written in the -ing form ("Removing", "Installing"), or based on a delimiter (e.g. "-").

Additionally or alternatively, machine learning methods as described above can be applied. These repair manuals typically only list special tools needed for a repair in the beginning and omit tools that are more common. These special tools can be extracted with similar methods as described above, i.e., the start of the tool list can be identified by its heading and the individual tools are typically listed line by line starting with a delimiter, e.g. "-".

The assistance method may build a catalogue of the common tools automatically by parsing the tool lists of internet resources of repair manuals for similar repairs, e.g., iFixit vehicle repair.

In some cases, the necessary tools are not mentioned in the text of a maintenance manual. However, typically a technical drawing contains precise visual descriptions of the parts to be manipulated, for example, including pictures of screw heads. Hence, by using image recognition methods, a type and a size of the depicted screws can be determined and the suitable tool be selected based on a manually curated look-up table or a further query of internet resources.

Alternatively or additionally, the method may analyse the object to be repaired visually and identify the screws and bolts. Different approaches to locate and classify screws exist, e.g. Hinterstoisser, S., Holzer, S., Cagniart, C., Ilic, S., Konolige, K., Navab, N., & Lepetit, V. (2011), November. Multimodal templates for real-time detection of texture-less objects in heavily cluttered scenes. In: Computer Vision (ICCV), 2011 IEEE International Conference on (pp. 858-865). IEEE; Calli, B., Singh, A., Walsman, A., Srinivasa, S., Abbeel, P., & Dollar, A. M. (2015, July). The ycb object and model set: Towards common benchmarks for manipulation research. In: Advanced Robotics (ICAR), 2015 International Conference on (pp. 510-517). IEEE; Huang, Y., Bianchi, M., Liarokapis, M., & Sun, Y. (2016). Recent data sets on object manipulation: A survey. Big data, 4(4), 197-216; Indoria, R., Semi-Automatic Data Acquisition for Convolutional Neural Networks, University of Bielefeld 2016.

The assistance system 1 may also apply visual recognition approaches as discussed above in order to monitor the progress of the task, as performed in the task status determination unit 12.

With the present invention, it is possible to flexibly assist a user in fulfilling a desired task. The assistance system 1 and the user will cooperate in the same manner as colleagues cooperating in performing the task because the flexibility of the assistance system 1 enables the robot to react in an adapted manner to any action that is taken by the user. Thus, the user may proceed through the different steps and subtasks that are necessary for performing the task and does not need to follow a strict sequence of actions in order to achieve a target in cooperation with the robot.

Although the assistance system 1 is discussed in detail referring to the specific application of car repair shop scenario, the assistance system 1 and the corresponding assistance method may advantageously be applied in a multitude of scenarios.

The assistance system 1 may be applied equally beneficially in an assembly line of a factory, which at least partially integrates production robots with human workers as users. The unstructured knowledge sources can include manufacturer manuals prepared for the human workers. The assistance system 1 can anticipate which tool is to be used in a next step. The assistance system 1 is then able to prepare the required tool, in particular to hand the required tool for the next step to the user of the assistance system 1 cooperating with the assistance system 1 in performing the manufacturing task. The assistance system 1 may also be able to correctly understand a user's explicit request for a required tool with an increased probability due to enhanced knowledge on the task-at-hand. This results in a more robust communication between the user and the robot with the inventive assistance system 1.

Apart from operating in work scenarios, leisure activities may also benefit from the inventive assistance system 1.

A user may profit from support by the assistance system 1 in repairing home appliances or gadgets. In this scenario, a capability of the assistance system 1 to learn from external sources accessible via internet, for example, using a web search tool is particularly useful and advantageous.

The assistance system 1 interprets the acquired unstructured knowledge sources, which may include iFixit. The user may then be supported to perform a repair task, which is entirely new for him and which will most probably not be repeated in the future by the user.

Alternatively or additionally, the user and the assistance system 1 cooperate in order to explore how to operate a novel device, on which yet no repair manuals are available.

The assistance system 1 may teach the user how to repair the home appliance. The assistance system 1 learns from external knowledge sources, such as repair manuals accessible via internet and provides step-by-step instructions to the user how to perform the repair and thus succeed in performing the repair task.

The assistance system 1 may teach the user a skill. The assistance system 1 learns from external knowledge sources such as an encyclopedia accessible online and provides additional information and/or background information to the user related to the task and thus enable the user to perform the task realizing a high quality due to taking into regard additional aspects. For example, the assistance system 1 may teach the user how to prune a cherry tree, how to build a nest box for particular types of birds or animals, or how to improve his photographing skills.

As a further example, the assistance system 1 may teach the user how to grow novel plants, fruits or the like in his garden and monitor the progress of their growth while providing feedback on this to the user.

Furthermore, the assistance system 1 may also teach the user how to prepare a recipe. In the latter case, the assistance system 1 may learn from external knowledge sources different recipes and their preparation and then not only support the user in their preparation but also help to select a recipe. For this, the assistance system 1 may engage with the user in a communication in which the assistance system 1 interactively refines a list of potential interesting recipes based on user input until a recipe matching the user's wishes is determined.

The invention defined in the appended claims may advantageously combine characteristics and features of the various discussed embodiments.

## Claims

1. Assistance system including a robot for assisting a user in fulfilling a task, the system comprising
the robot configured to contribute cooperatively in performing the task cooperatively with the user,
a human-machine interface unit (5) for communicating with the user,
at least one of at least one visual sensor (7) and an acoustic sensor (6),
and
a processor (20) configured to interpret a user input obtained by the human-machine interface unit (5),
and
to monitor a task progress by interpreting at least one of the user input and image data acquired by the at least one visual sensor (7) depicting the user,
wherein the processor (20) is further configured to generate a support signal based on a generated internal representation and the monitored task progress, and to output the generated support signal to output means (23, 24, 25) of the system or to a robot cooperating with the user,
wherein the support signal comprises information how to perform a current step and on manipulating objects and/or parts of objects involved in the current step,
wherein the support signal comprises information on manipulating at least one object or information on how to perform the task, and
**characterized in**
**that** the system further comprises
a task input unit (21) configured to obtain unstructured knowledge source data on the task,
wherein the obtained unstructured knowledge source data comprises at least a manual in written format prepared for a human user, and
the processor (20) is further configured to analyze the obtained unstructured knowledge source data for generating the internal representation of the task by
subdividing the task into individual steps and arranging the individual steps in a time sequence for sequential and/or parallel execution based on a dependency between the individual steps, and by
identifying for each step which object(s) and/or part(s) of object(s) is/are involved in executing the step, the object(s) and/or part(s) of object(s) in particular including tools and/or spare parts, and to determine how the involved object(s) and/or part(s) of object(s) is/are to be manipulated for performing the task,
wherein the internal representation of the task comprises at least information on the task the user intends to fulfill, information on objects the user requires for performing the task and individual steps of the task.

2. The assistance system according to claim 1, **characterized in that**
the processor (20) is configured to monitor the task progress by interpreting the user input including at least one of an oral user input, at least one visually perceivable gesture of the user, a tactile input of the user, and by interpreting the image data acquired from a visual sensor (7) and which depicts the user and the at least one object and/or at least one part of an object involved in the task.

3. The assistance system according to one of the preceding claims, **characterized in that**
the processor (20) is configured to generate the support signal including the information on manipulating the object(s) and/or the part(s) of object(s) comprising control information enabling the system to hand the at least one object and/or at least one part of an object to the user and/or fetch the at least one object and/or at least one part of the object from the user.

4. The assistance system according to one of the preceding claims, **characterized in that**
the processor (20) is configured to determine the at least one object and/or at least one part of an object required in a current step based on combining the obtained user input with the generated internal representation of the task.

5. The assistance system according to one of the preceding claims, **characterized in that**
the processor (20) is configured to predict the at least one object and/or at least one part of an object required in a future step based on combining the obtained user input with the generated internal representation of the task.

6. The assistance system according to one of the preceding claims, **characterized in that**
the processor (20) is configured to obtain unstructured knowledge source data on at least one task which is similar to the task to be performed, and
the processor (20) is configured to analyze the obtained unstructured knowledge source data on the at least one similar task for generating the internal representation of the task to be performed.

7. The assistance system according to any of the preceding claims, **characterized in that**
the generated internal representation of the task includes at least one hypothesis on how to perform the current task.

8. The assistance system according to one of claim 7, **characterized in that**
the processor (20) is configured to apply a weight to the at least one hypothesis based on the user input relating to at least one of the task to be performed, the objects involved in the task, a time sequence of involvement of the objects, and the acquired image data.

9. The assistance system according to one of claims 7 or 8, **characterized in that**
the processor (20) is configured to provide the at least one hypothesis together with a confidence value assigned to the at least one hypothesis in the output signal to the user.

10. The assistance system according to one of the preceding claims, **characterized in that**
the processor (20) is configured to generate and output a step-by-step instruction for performing the task.

11. The assistance system according to one of the preceding claims, **characterized in that**
the task input unit (20) is configured to retrieve visual information on the task, and
the processor (20) is configured to provide the retrieved visual information in the output signal to the user.

12. The assistance system according to claim 11, **characterized in that**
the processor (20) is configured to extract the visual information from a description of the task, or to perform an image search using a web search machine and keywords relevant to the task.

13. The assistance system according to one of the preceding claims, **characterized in that**
the processor (20) is configured to generate and to output in the output signal feedback information on at least one of task progress and task success.

14. The assistance system according to claim 13, **characterized in that**
the processor (20) is configured to generate the feedback information based on comparing the retrieved visual information with the acquired image data.

15. The assistance system according to one of the preceding claims, **characterized in that**
the processor (20) is configured to generate general information on the task, the general information comprising information at least on one of objects that will be needed during execution of the task, a time that the task might take and a level of difficulty of the task, and to output the general information to the user.

16. Method for an assistance system (1) assisting a user in fulfilling a task, wherein the assistance system (1) comprises a robot, a human-machine interface unit (5) for communicating with the user, a processor (20), a task input unit (21), at least one of at least one visual sensor (7) and an acoustic sensor (6), and the method comprising the following method steps:
interpreting (S5) by the processor (20) a user input obtained by the human-machine interface unit (5),
monitoring (S6) by the processor (20) a task progress indicating a progress in performing the task by interpreting at least one of the user input and image data acquired by the at least one visual sensor (7) depicting the user,
generating (S7) by the processor (20) a support signal based on a generated internal representation of the task and the monitored task progress, wherein the support signal comprises information how to perform a current step and on manipulating objects and/or parts of objects involved in the current step, and
outputting the generated support signal to output means (23, 24, 25) of the system (1) or to a robot that cooperates with the user, wherein the support signal comprises information on manipulating at least one object or information on how to perform the task, and
**characterized in**
**that** the method further comprises
obtaining (S 1) by the task input unit (21) unstructured knowledge source data on the task,
wherein the obtained unstructured knowledge source data comprises at least a manual in written format prepared for a human user,
analyzing (S2) by the processor (20) the obtained unstructured knowledge source data and generating (S3) the internal representation of the task by subdividing the task into individual steps and arranging the individual steps in a time sequence for sequential and/or parallel execution based on a dependency between the individual steps, and by
identifying for each step which object(s) and/or part(s) of object(s) is/are involved in executing the step, the object(s) and/or part(s) of object(s) in particular including tools and/or spare parts, and to determine how the involved object(s) and/or part(s) of object(s) is/are to be manipulated for performing the task, and
wherein the internal representation of the task comprises at least information on the task the user intends to fulfill, information on objects the user requires for performing the task and individual steps of the task.

17. Computer program with program-code means for executing the steps according to claim 16, when the program is executed on a computer or digital signal processor.

## Patentansprüche

1. Assistenzsystem mit einem Roboter zur Unterstützung eines Benutzers bei der Erfüllung einer Aufgabe, wobei das System Folgendes aufweist:
den Roboter, der so ausgebildet ist, dass er kooperativ mit dem Benutzer zur Ausführung der Aufgabe beiträgt,
eine Mensch-Maschine-Schnittstelleneinheit (5) zur Kommunikation mit dem Benutzer, zumindest einen von zumindest einem visuellen Sensor (7) und einem akustischen Sensor (6), und
einen Prozessor (20), ausgebildet, um eine von der Mensch-Maschine-Schnittstelleneinheit (5) erhaltene Benutzereingabe zu interpretieren,
und um
einen Aufgabenfortschritt zu überwachen, indem zumindest eine der Benutzereingaben und den Benutzer darstellende, von dem zumindest einen visuellen Sensor (7) aufgenommene Bilddaten interpretiert werden,
wobei der Prozessor (20) ferner so ausgebildet ist, dass er auf der Grundlage einer erzeugten internen Darstellung und des überwachten Aufgabenfortschritts ein Unterstützungssignal erzeugt und das erzeugte Unterstützungssignal an eine Ausgabeeinrichtung (23, 24, 25) des Systems oder an einen mit dem Benutzer kooperierenden Roboter ausgibt,
wobei das Unterstützungssignal Informationen darüber enthält, wie ein aktueller Schritt auszuführen ist, sowie über die Handhabung von Objekten und/oder Teilen von Objekten, die an dem aktuellen Schritt beteiligt sind,
wobei das Unterstützungssignal Informationen über das Manipulieren zumindest eines Objekts oder Informationen darüber, wie die Aufgabe auszuführen ist, umfasst, **dadurch gekennzeichnet, dass**
das System ferner aufweist:
eine Aufgabeneingabeeinheit (21), die so ausgebildet ist, dass sie unstrukturierte Wissensquellendaten über die Aufgabe erhält, wobei die erhaltenen unstrukturierten Wissensquellendaten zumindest ein für einen menschlichen Benutzer erstelltes schriftliches Handbuch umfassen, und
der Prozessor (20) ferner so ausgebildet ist, dass er, um die interne Darstellung der Aufgabe zu erzeugen, die erhaltenen unstrukturierten Wissensquellendaten analysiert, indem er die Aufgabe in einzelne Schritte unterteilt und, zur sequentiellen und/oder parallelen Ausführung, aufgrund einer Abhängigkeit zwischen den einzelnen Schritten, die einzelnen Schritte in einer zeitlichen Abfolge anordnet, und indem er
für jeden Schritt identifiziert, welche(s) Objekt(e) und/oder Teil(e) von Objekt(en) an der Ausführung des Schritts beteiligt ist/sind, wobei das/die Objekt(e) und/oder Teil(e) von Objekt(en) insbesondere Werkzeuge und/oder Ersatzteile einschließt/einschließen, und bestimmt, wie das/die beteiligte(n) Objekt(e) und/oder Teil(e) von Objekt(en) zur Durchführung der Aufgabe zu handhaben ist/sind,
wobei die interne Darstellung der Aufgabe zumindest Informationen über die vom Benutzer zu erfüllen beabsichtigte Aufgabe, Informationen über vom Benutzer zur Erfüllung der Aufgabe benötigte Objekte, sowie einzelne Schritte der Aufgabe umfasst.

2. Das Assistenzsystem nach Anspruch 1, **dadurch gekennzeichnet, dass**
der Prozessor (20) ausgebildet ist, um den Fortschritt der Aufgabe zu überwachen, indem er die Benutzereingabe interpretiert, einschließlich zumindest einer mündlichen Benutzereingabe, zumindest einer visuell wahrnehmbaren Geste des Benutzers, einer taktilen Eingabe des Benutzers, und indem er die von einem visuellen Sensor (7) erfassten, den Benutzer und das zumindest eine Objekt und/oder zumindest einen Teil eines an der Aufgabe beteiligten Objekts darstellenden Bilddaten interpretiert.

3. Das Assistenzsystem nach einem der vorherigen Ansprüche, **dadurch gekennzeichnet, dass** der Prozessor (20) ausgebildet ist, um das die Informationen über die Handhabung des Objekts/der Objekte und/oder des Teils/der Teile des Objekts/der Teile des Objekts aufweisende Unterstützungssignal zu erzeugen, wobei diese Informationen Steuerinformationen enthalten, die es dem System ermöglichen, das zumindest eine Objekt und/oder zumindest einen Teil eines Objekts an den Benutzer zu übergeben und/oder das zumindest eine Objekt und/oder zumindest einen Teil des Objekts von dem Benutzer abzurufen.

4. Das Assistenzsystem nach einem der vorherigen Ansprüche, **dadurch gekennzeichnet, dass** der Prozessor (20) ausgebildet ist, um das zumindest eine Objekt und/oder zumindest einen Teil eines Objekts, der in einem aktuellen Schritt benötigt wird, auf Grundlage der Kombination der erhaltenen Benutzereingabe mit der erzeugten internen Darstellung der Aufgabe zu bestimmen.

5. Das Assistenzsystem nach einem der vorherigen Ansprüche, **dadurch gekennzeichnet, dass** der Prozessor (20) ausgebildet ist, um das zumindest eine Objekt und/oder zumindest einen Teil eines Objekts, der in einem zukünftigen Schritt benötigt wird, auf Grundlage der Kombination der erhaltenen Benutzereingabe mit der erzeugten internen Darstellung der Aufgabe vorherzusagen.

6. Das Assistenzsystem nach einem der vorherigen Ansprüche, **dadurch gekennzeichnet, dass** der Prozessor (20) ausgebildet ist, um unstrukturierte Wissensquellendaten über zumindest eine Aufgabe zu erhalten, die der auszuführenden Aufgabe ähnlich ist, und
der Prozessor (20) ausgebildet ist, um die erhaltenen unstrukturierten Wissensquellendaten zu der zumindest einen ähnlichen Aufgabe zu analysieren, um die interne Darstellung der durchzuführenden Aufgabe zu erzeugen.

7. Das Assistenzsystem nach einem der vorherigen Ansprüche, **dadurch gekennzeichnet, dass** die erzeugte interne Darstellung der Aufgabe zumindest eine Hypothese darüber enthält, wie die aktuelle Aufgabe auszuführen ist.

8. Das Assistenzsystem nach Anspruch 7, **dadurch gekennzeichnet, dass** der Prozessor (20) so ausgebildet ist, dass er auf die zumindest eine Hypothese eine auf der Benutzereingabe basierende Gewichtung anwendet, die sich auf zumindest eines der folgenden Elemente bezieht: die auszuführende Aufgabe, die an der Aufgabe beteiligten Objekte, eine zeitliche Abfolge der Beteiligung der Objekte und die erfassten Bilddaten.

9. Das Assistenzsystem nach einem der Ansprüche 7 oder 8, **dadurch gekennzeichnet, dass** der Prozessor (20) so ausgebildet ist, dass er die zumindest eine Hypothese, zusammen mit einem, der zumindest einen Hypothese im Ausgangssignal zugeordneten Konfidenzwert, dem Benutzer zur Verfügung stellt.

10. Das Assistenzsystem nach einem der vorherigen Ansprüche, **dadurch gekennzeichnet, dass**
der Prozessor (20) so ausgebildet ist, dass er zur Durchführung der Aufgabe eine Schritt-für-Schritt-Anweisung erzeugt und ausgibt.

11. Das Assistenzsystem nach einem der vorherigen Ansprüche, **dadurch gekennzeichnet, dass**
die Aufgabeneingabeeinheit (21) so ausgebildet ist, dass sie visuelle Informationen über die Aufgabe abruft, und
der Prozessor (20) so ausgebildet ist, dass er die abgerufenen visuellen Informationen in dem Ausgangssignal dem Benutzer zur Verfügung stellt.

12. Das Assistenzsystem nach Anspruch 11, **dadurch gekennzeichnet, dass** der Prozessor (20) so ausgebildet ist, dass er die visuellen Informationen aus einer Beschreibung der Aufgabe extrahiert oder unter Verwendung einer Websuchmaschine und für die Aufgabe relevanter Schlüsselwörter eine Bildsuche durchführt.

13. Das Assistenzsystem nach einem der vorherigen Ansprüche, **dadurch gekennzeichnet, dass**
der Prozessor (20) so ausgebildet ist, dass er über den Aufgabenfortschritt und/oder den Aufgabenerfolg Rückmeldeinformationen erzeugt und in dem Ausgangssignal ausgibt.

14. Das Assistenzsystem nach Anspruch 13, **dadurch gekennzeichnet, dass** der Prozessor (20) so ausgebildet ist, dass er die Rückmeldeinformationen auf der Grundlage eines Vergleichs der abgerufenen visuellen Informationen mit den erfassten Bilddaten erzeugt.

15. Das Assistenzsystem nach einem der vorherigen Ansprüche, **dadurch gekennzeichnet, dass**
der Prozessor (20) ausgebildet ist, um allgemeine Informationen über die Aufgabe zu erzeugen, wobei die allgemeinen Informationen Informationen über während der Ausführung der Aufgabe benötigte Objekte und/oder über eine Zeit, die die Aufgabe dauern könnte und/oder über einen Schwierigkeitsgrad der Aufgabe umfassen, und um die allgemeinen Informationen an den Benutzer auszugeben.

16. Verfahren für ein Assistenzsystem (1), das einen Benutzer bei der Erfüllung einer Aufgabe unterstützt, wobei das Assistenzsystem (1) einen Roboter, eine Mensch-Maschine-Schnittstelleneinheit (5) zur Kommunikation mit dem Benutzer, einen Prozessor (20), eine Aufgabeneingabeeinheit (21), zumindest einen von zumindest einem visuellen Sensor (7) und einem akustischen Sensor (6) umfasst, wobei das Verfahren die folgenden Schritte aufweist:
Interpretieren (S5) einer von der Mensch-Maschine-Schnittstelleneinheit (5) erhaltenen Benutzereingabe durch den Prozessor (20),
Überwachen (S6) eines einen Fortschritt bei der Durchführung der Aufgabe anzeigenden Aufgabenfortschritts durch den Prozessor (20), indem zumindest eine der Benutzereingaben sowie von dem zumindest einen visuellen Sensor (7) erfasste, den Benutzer darstellende Bilddaten interpretiert werden,
Erzeugen (S7) eines Unterstützungssignals durch den Prozessor (20) auf der Grundlage einer erzeugten internen Darstellung der Aufgabe und des überwachten Aufgabenfortschritts, wobei das Unterstützungssignal Informationen darüber umfasst, wie ein aktueller Schritt auszuführen ist, sowie über die Handhabung von Objekten und/oder Teilen von Objekten, welche an dem aktuellen Schritt beteiligt sind, und
Ausgeben des erzeugten Unterstützungssignals an eine Ausgabeeinrichtung (23, 24, 25) des Systems (1) oder an einen mit dem Benutzer kooperierenden Roboter, wobei das Unterstützungssignal Informationen aufweist, über das Manipulieren zumindest eines Objekts oder darüber, wie die Aufgabe auszuführen ist,
**dadurch gekennzeichnet**
**dass** das Verfahren ferner folgende Schritte aufweist:
Erhalten (S1), durch die Aufgabeneingabeeinheit (21), von unstrukturierten Wissensquellendaten über die Aufgabe,
wobei die erhaltenen unstrukturierten Wissensquellendaten zumindest ein für einen menschlichen Benutzer erstelltes schriftliches Handbuch in schriftlichem Format umfassen,
Analysieren (S2) der erhaltenen unstrukturierten Wissensquellendaten durch den Prozessor (20) und Erzeugen (S3) der internen Darstellung der Aufgabe durch Unterteilen der Aufgabe in einzelne Schritte und Anordnen der einzelnen Schritte in einer zeitlichen Abfolge zur sequentiellen und/oder parallelen Ausführung auf der Grundlage einer Abhängigkeit zwischen den einzelnen Schritten, sowie durch Identifizieren, für jeden Schritt, welche(s) Objekt(e) und/oder Teil(e) von Objekt(en) an der Ausführung des Schritts beteiligt ist/sind, wobei das/die Objekt(e) und/oder Teil(e) von Objekt(en) insbesondere Werkzeuge und/oder Ersatzteile einschließt/einschließen, und zu bestimmen, wie das/die beteiligte(n) Objekt(e) und/oder Teil(e) von Objekt(en) zur Ausführung der Aufgabe zu handhaben ist/sind, und
wobei die interne Darstellung der Aufgabe zumindest Informationen über die vom Benutzer zu erfüllen beabsichtigte Aufgabe, Informationen über vom Benutzer zur Durchführung der Aufgabe benötigte Objekte, sowie einzelne Schritte der Aufgabe umfasst.

17. Computerprogramm mit Programmcodemitteln zur Ausführung der Schritte nach Anspruch 16, wenn das Programm auf einem Computer oder digitalen Signalprozessor läuft.

## Revendications

1. Système d'assistance comportant un robot pour aider un utilisateur à accomplir une tâche, le système comprenant
le robot, configuré pour contribuer à réaliser la tâche en coopération avec l'utilisateur,
une unité d'interface homme-machine (5) pour communiquer avec l'utilisateur,
au moins l'un parmi au moins un capteur visuel (7) et un capteur acoustique (6), et
un processeur (20) configuré pour interpréter une entrée utilisateur obtenue par l'unité d'interface homme-machine (5), et
pour surveiller une progression de tâche en interprétant au moins une parmi l'entrée utilisateur et des données d'image acquises par l'au moins un capteur visuel (7) représentant l'utilisateur,
dans lequel le processeur (20) est en outre configuré pour générer un signal d'aide sur la base d'une représentation interne générée et de la progression de tâche surveillée, et pour délivrer en sortie le signal d'aide généré à des moyens de sortie (23, 24, 25) du système ou à un robot coopérant avec l'utilisateur,
dans lequel le signal d'aide comprend des informations sur la manière de réaliser une étape en cours et sur la manipulation d'objets et/ou de parties d'objets impliqués dans l'étape en cours,
dans lequel le signal d'aide comprend des informations sur la manipulation d'au moins un objet ou des informations sur la manière de réaliser la tâche, et
**caractérisé en ce que**
le système comprend en outre
une unité d'entrée de tâche (21) configurée pour obtenir des données de source de connaissances non structurées sur la tâche, où les données de source de connaissances non structurées obtenues comprennent au moins un manuel dans un format écrit préparé pour un utilisateur humain, et
le processeur (20) est en outre configuré pour analyser les données de source de connaissances non structurées obtenues pour générer la représentation interne de la tâche en
subdivisant la tâche en étapes individuelles et en agençant les étapes individuelles dans une séquence temporelle pour une exécution séquentielle et/ou parallèle sur la base d'une dépendance entre les étapes individuelles, et
identifiant pour chaque étape quel(s) objet(s) et/ou quelle(s) partie(s) d'objet(s) sont impliqués dans l'exécution de l'étape, le ou les objets et/ou la ou les parties d'objets comportant en particulier des outils et/ou des pièces de recharge, et pour déterminer comment le ou les objets et/ou la ou les parties d'objet(s) impliqués doivent être manipulés pour réaliser la tâche,
dans lequel la représentation interne de la tâche comprend au moins des informations sur la tâche que l'utilisateur a l'intention d'accomplir, des informations sur des objets dont l'utilisateur a besoin pour réaliser la tâche et des étapes individuelles de la tâche.

2. Système d'assistance selon la revendication 1, **caractérisé en ce que**
le processeur (20) est configuré pour surveiller la progression de tâche en interprétant l'entrée utilisateur comportant au moins l'un parmi une entrée utilisateur orale, au moins un geste visuellement perceptible de l'utilisateur, une entrée tactile de l'utilisateur, et en interprétant les données d'image acquises à partir d'un capteur visuel (7) et qui représentent l'utilisateur et l'au moins un objet et/ou l'au moins une partie d'un objet impliqués dans la tâche.

3. Système d'assistance selon l'une quelconque des revendications précédentes, **caractérisé en ce que**
le processeur (20) est configuré pour générer le signal d'aide comportant les informations sur la manipulation du ou des objets et/ou de la ou des parties d'objet(s) comprenant des informations de commande permettant au système de remettre l'au moins un objet et/ou l'au moins une partie d'un objet à l'utilisateur et/ou de récupérer l'au moins un objet et/ou l'au moins une partie d'objet de l'utilisateur.

4. Système d'assistance selon l'une quelconque des revendications précédentes, **caractérisé en ce que**
le processeur (20) est configuré pour déterminer l'au moins un objet et/ou l'au moins une partie d'un objet requis dans une étape en cours sur la base de la combinaison de l'entrée utilisateur obtenue avec la représentation interne générée de la tâche.

5. Système d'assistance selon l'une quelconque des revendications précédentes, **caractérisé en ce que**
le processeur (20) est configuré pour prédire l'au moins un objet et/ou l'au moins une partie d'un objet requis dans une étape ultérieure sur la base de la combinaison de l'entrée utilisateur obtenue avec la représentation interne générée de la tâche.

6. Système d'assistance selon l'une quelconque des revendications précédentes, **caractérisé en ce que**
le processeur (20) est configuré pour obtenir des données de source de connaissances non structurées sur au moins une tâche qui est similaire à la tâche à réaliser, et
le processeur (20) est configuré pour analyser les données de source de connaissances non structurées obtenues sur l'au moins une tâche similaire pour générer la représentation interne de la tâche à réaliser.

7. Système d'assistance selon l'une quelconque des revendications précédentes, **caractérisé en ce que**
la représentation interne générée de la tâche comporte au moins une hypothèse sur la manière de réaliser la tâche en cours.

8. Système d'assistance selon l'une de la revendication 7, **caractérisé en ce que**
le processeur (20) est configuré pour appliquer un poids à l'au moins une hypothèse sur la base de l'entrée utilisateur concernant au moins un parmi la tâche à réaliser, les objets impliqués dans la tâche, une séquence temporelle d'implication des objets, et les données d'image acquises.

9. Système d'assistance selon l'une des revendications 7 ou 8, **caractérisé en ce que**
le processeur (20) est configuré pour fournir à l'utilisateur l'au moins une hypothèse ainsi qu'une valeur de confiance attribuée à l'au moins une hypothèse dans le signal de sortie.

10. Système d'assistance selon l'une quelconque des revendications précédentes, **caractérisé en ce que**
le processeur (20) est configuré pour générer et délivrer en sortie une instruction étape par étape pour réaliser la tâche.

11. Système d'assistance selon l'une quelconque des revendications précédentes, **caractérisé en ce que**
l'unité d'entrée de tâche (20) est configurée pour récupérer des informations visuelles sur la tâche, et
le processeur (20) est configuré pour fournir à l'utilisateur les informations visuelles récupérées dans le signal de sortie.

12. Système d'assistance selon la revendication 11, **caractérisé en ce que**
le processeur (20) est configuré pour extraire les informations visuelles à partir d'une description de la tâche, ou pour réaliser une recherche d'images à l'aide d'un moteur de recherche sur le Web et de mots-clés pertinents pour la tâche.

13. Système d'assistance selon l'une quelconque des revendications précédentes, **caractérisé en ce que**
le processeur (20) est configuré pour générer et pour délivrer en sortie dans le signal de sortie des informations de rétroaction sur au moins l'une parmi une progression de tâche et une réussite de la tâche.

14. Système d'assistance selon la revendication 13, **caractérisé en ce que**
le processeur (20) est configuré pour générer les informations de rétroaction sur la base de la comparaison des informations visuelles récupérées avec les données d'image acquises.

15. Système d'assistance selon l'une quelconque des revendications précédentes, **caractérisé en ce que**
le processeur (20) est configuré pour générer des informations générales sur la tâche, les informations générales comprenant des informations sur au moins l'un parmi des objets qui seront nécessaires pendant l'exécution de la tâche, un temps que la tâche pourrait prendre et un niveau de difficulté de la tâche, et pour délivrer en sortie les informations générales à l'utilisateur.

16. Procédé pour un système d'assistance (1) aidant un utilisateur à accomplir une tâche, dans lequel le système d'assistance (1) comprend un robot, une unité d'interface homme-machine (5) pour communiquer avec l'utilisateur, un processeur (20), une unité d'entrée de tâche (21), au moins l'un parmi au moins un capteur visuel (7) et un capteur acoustique (6), et le procédé comprenant les étapes de procédé suivantes :
interpréter (S5), par le processeur (20), une entrée utilisateur obtenue par l'unité d'interface homme-machine (5),
surveiller (S6), par le processeur (20), une progression de tâche indiquant une progression dans la réalisation la tâche en interprétant au moins une parmi l'entrée utilisateur et des données d'image acquises par l'au moins un capteur visuel (7) représentant l'utilisateur,
générer (S7), par le processeur (20), un signal d'aide sur la base d'une représentation interne générée de la tâche et de la progression de tâche surveillée, où le signal d'aide comprend des informations sur la manière de réaliser une étape en cours et sur la manipulation d'objets et/ou de parties d'objets impliqués dans l'étape en cours, et
délivrer en sortie le signal d'aide généré à des moyens de sortie (23, 24, 25) du système (1) ou à un robot qui coopère avec l'utilisateur, où le signal d'aide comprend des informations sur la manipulation d'au moins un objet ou des informations sur la manière de réaliser la tâche, et
**caractérisé en ce que**
le procédé comprend en outre
l'obtention (S1), par l'unité d'entrée de tâche (21), de données de source de connaissances non structurées sur la tâche,
dans lequel les données de source de connaissances non structurées obtenues comprennent au moins un manuel dans un format écrit préparé pour un utilisateur humain,
l'analyse (S2) par le processeur (20) des données de source de connaissances non structurées obtenues et
la génération (S3) de la représentation interne de la tâche en subdivisant la tâche en étapes individuelles et en agençant les étapes individuelles dans une séquence temporelle pour une exécution séquentielle et/ou parallèle sur la base d'une dépendance entre les étapes individuelles, et en
identifiant pour chaque étape quel(s) objet(s) et/ou quelle(s) partie(s) d'objet(s) sont impliqués dans l'exécution de l'étape, le ou les objets et/ou la ou les parties d'objet(s) comportant en particulier des outils et/ou des pièces de recharge, et pour déterminer comment le ou les objets et/ou la ou les parties d'objet(s) impliqués doivent être manipulés pour réaliser la tâche, et
dans lequel la représentation interne de la tâche comprend au moins des informations sur la tâche que l'utilisateur a l'intention d'accomplir, des informations sur des objets dont l'utilisateur a besoin pour réaliser la tâche et des étapes individuelles de la tâche.

17. Programme informatique ayant des moyens de code de programme pour exécuter les étapes selon la revendication 16, lorsque le programme est exécuté sur un ordinateur ou un processeur de signaux numériques.
